# EUROPÄISCHE PATENTSCHRIFT

(11) **EP 3 213 852 B1**
(45) Veröffentlichungstag und Bekanntmachung des Hinweises auf die Patenterteilung: **12.06.2019**
(21) Anmeldenummer: 17150963.1
(22) Anmeldetag: 11.01.2017
(51) Int. Cl.: B23K 11/30, B23K 11/31

(54) **WIDERSTANDSSCHWEISSVORRICHTUNG**
RESISTANCE WELDING DEVICE
DISPOSITIF DE SOUDAGE PAR RÉSISTANCE

(30) Priorität: 03.03.2016 DE 102016203511
(43) Veröffentlichungstag der Anmeldung: 06.09.2017
(73) Patentinhaber: Otto Bihler Handels-Beteiligungs-GmbH, 87642 Halblech (DE)
(72) Erfinder: MUCHE, Norbert, 87669 Rieden am Forggensee (DE)
(74) Vertreter: Weickmann & Weickmann PartmbB

(56) Entgegenhaltungen:
- JP-A- H11 320 106
- US-A1- 2015 069 026

## Beschreibung

Die Erfindung betrifft eine Widerstandsschweißvorrichtung, gemäß dem Oberbegriff des Anspruchs 1, wie z.B. aus US 2015/069026 A1 bekannt.

Derartige Widerstandsschweißvorrichtungen werden z.B. zum Punktschweißen oder Buckelschweißen oder Kontaktschweißen herangezogen. Widerstandsschweißvorrichtungen der hier betrachteten Art können z.B. stationäre Schweißvorrichtungen sein, die üblicherweise einen fixierten Rahmen haben, an dem die Schweißelektroden vorgesehen sind, nämlich die bewegbare Elektrode mit ihrer Zustelleinrichtung einerseits und die betreffende Gegenelektrode andererseits. Diese Gegenelektrode ist meistens rahmenfest fixiert, kann jedoch in speziellen Ausführungsformen ebenfalls mittels einer betreffenden Zustelleinrichtung bewegbar ausgestaltet sein. Eine Schweißstromquelle dient zur Bereitstellung des Schweißstroms und umfasst üblicherweise einen Schweißstromtransformator. Es sind diverse verschiedene Schweißstromquellentypen bekannt, z.B. Wechselstromquellen, Gleichstromquellen und Kondensatorentladestromquellen. Jede dieser Stromquellen kann bei einer Widerstandsschweißvorrichtung der vorliegenden Erfindung Anwendung finden.

Weiterhin haben Widerstandsschweißvorrichtungen der hier betrachteten Art eine Steuereinrichtung zur Kontrolle der Arbeitsweise der betreffenden Widerstandsschweißvorrichtung bei den Schweißprozessen. Eine solche Steuervorrichtung kann einen oder mehrere Steuerungsrechner umfassen. Steuerungsbedarf kann bestehen bei der Einstellung bzw. Regelung des Schweißstroms, der Zustellbewegung der Schweißelektroden, der von den Elektroden auf das Schweißgut auszuübenden Elektrodenkraft, der Kontrolle der Prozesszeiten, des Transports des Schweißgutes, usw.. Insbesondere synchronisiert die Steuereinrichtung den zeitlichen Verlauf von Schweißstrom und Elektrodenkraft mit den erforderlichen Maschinenabläufen.

Widerstandsschweißvorrichtungen können als Handarbeitsplätze definiert sein, wobei eine Bedienungsperson die Zuführung des Schweißgutes zwischen den Elektroden vornimmt und den Schweißvorgang auslöst. Bei den hier betrachteten Widerstandsschweißvorrichtungen handelt es sich jedoch vorzugsweise um automatisierte Systeme für die Massenproduktion, wobei gesteuerte Schweißgutzuführeinrichtungen für kontinuierliche oder getaktete Zuführung des Schweißgutes in Zuordnung zum Schweißtakt sorgen. Bei dem Schweißgut kann es sich z.B. um miteinander zu verbindende Blechteile, Drahtabschnitte u. dgl. handeln. Auch das Aufschweißen von Kontaktmaterial auf Kontaktträgerflächen oder das Aufschweißen von Kabelenden auf Blechteilen oder dgl. ist durch Widerstandsschweißen mittels einer Widerstandsschweißvorrichtung im Massenproduktionsverfahren möglich.

Beim Punktschweißen oder Buckelschweißen und auch beim Aufschweißen von Kontaktmaterial auf Trägerflächen kommt es in der Massenfertigung von Präzisionsteilen auf eine präzise Einhaltung der vorgegebenen Prozessparameter, wie Schweißstrom, Elektrodenkraft, Schweißdauer usw. an. Für die Herstellung präziser Schweißverbindungen ist insbesondere auch ein gut definierter Zustellvorgang bei der Zustellung der Schweißelektroden zum Schweißgut wichtig. Dabei sollte die bewegliche erste Elektrode möglichst stoß- und prellfrei auf das Schweißgut aufsetzen und beim Aufweichen des Schweißgutes an der Schweißstelle definiert nachsetzen. Besonders für das Widerstandsbuckelschweißen oder das Aufschweißen von Kontaktmaterial wird eine hohe Nachsetzgeschwindigkeit gefordert, um den zusammenbrechenden Buckel bzw. das schmelzende Kontaktmaterial sicher zu fügen und punktförmige Schweißverbindungen hoher Qualität zu erzielen. Maßgebend für die Qualität der entstehenden Schweißverbindungen sind neben der präzisen Steuerung des Schweißstromes auch die dynamischmechanischen Maschineneigenschaften, wozu wesentlich auch das Nachsetzverhalten der Elektrodenzustelleinrichtung beiträgt. Häufig ist im Kraftübertragungsweg zwischen dem Elektromotor der Zustelleinrichtung und der beweglichen Elektrode eine Federanordnung vorgesehen, die auch als Nachsetzfeder bezeichnet wird und ein dynamisches Nachführen der Elektrode während des Schweißvorgangs unter gut reproduzierbaren Bedingungen ermöglicht.

Bisher war es bekannt, Rotationselektromotoren als Antriebe in der Elektrodenzustelleinrichtung einzusetzen und über ein Getriebe die erforderliche lineare Bewegung zu erzeugen. Die Umsetzung der Rotationsbewegung in eine Linearbewegung wird dabei mit Hilfe einer Zahnstange, eines Zahnriemens, einer Spindel oder dgl. realisiert. Die dadurch vorliegende zusätzliche Masse, das mechanische Getriebespiel sowie die Getriebeelastizität wirken sich auf das Betriebsverhalten des betreffenden Linearantriebs aus. Außerdem ist ein solches Getriebe verlustbehaftet und kann durch Verschleiß zu einer Lebensdauer begrenzenden Komponente einer betreffenden Zustelleinrichtung werden. Ferner können Getriebebetriebsgeräusche unerwünscht sein.

Das dynamisch-mechanische Verhalten der Zustelleinrichtung von Widerstandsschweißvorrichtungen der hier betrachteten Art ist insbesondere auch durch etwaig mit zu bewegender Schweißstromkabel beeinflusst, die bei bisher bekannten Widerstandsschweißvorrichtungen von der Schweißstromquelle von außen her direkt zu den Elektroden geführt sind. Das an einer jeweiligen bewegbaren Elektrode unmittelbar angeschlossene Schweißstromkabel muss bei deren Zustellung stets mitbewegt werden. Da die Schweißstromkabel bei der freien Außenverlegung relativ lang sind und relativ große Leitungsquerschnitte aufweisen müssen, um die hohen Schweißströme leiten zu können, haben sie eine relativ große zu bewegende Masse und stellen nur bedingt flexible Anhängsel der Elektroden dar, was die Kontrolle der Zustellbewegung der bewegbaren Elekrode(n) einschließlich des Nachsetzvorganges mittels der bekannten Zustelleinrichtungen erschwert. Dies kann sich in einer unzureichenden Reproduzierbarkeit der Schweißergebnisse widerspiegeln.

Der vorliegenden Erfindung liegt die Aufgabe zugrunde, eine Widerstandsschweißvorrichtung der eingangs genannten Art bereitzustellen, bei der die vorstehend genannten Nachteile des Standes der Technik zumindest weitgehend überwunden sind und insbesondere ein gut kontrollierbarer und gut reproduzierbarer Zustellvorgang beim Zustellen der Elektrode(n) zum Schweißgut möglich ist, um ein gutes Schweißergebnis auch in der Massenfertigung zu erzielen.

Zur Lösung dieser Aufgabe wird eine Widerstandsschweißvorrichtung mit den Merkmalen des Anspruchs 1 vorgeschlagen.

Die erfindungsgemäße Verwendung eines Linearmotors, also eines elektromagnetischen Direktlinearantriebs ist in mehrfacher Weise vorteilhaft im Vergleich mit bisherigen Linearantrieben von Elektrodenzustelleinrichtungen. Diese Nachteile der bekannten Widerstandsschweißvorrichtungen mit Rotationselektromotoren und Getrieben zur Umsetzung der Rotationsbewegung in die erforderliche Linearbewegung können durch Realisierung der vorliegenden erfinderischen Idee überwunden werden, da der erfindungsgemäß eingesetzte Linearmotor als elektromagnetischer Direktlinearantrieb die Motorkraft direkt auf die zu bewegende Last ausübt, so dass kein mechanisches Getriebespiel und keine zusätzliche Getriebemasse das dynamisch-mechanische Verhalten der Zustelleinrichtung beeinträchtigen kann. Ferner weist die Zustelleinrichtung mit dem Linearmotor einen vergleichsweise niedrigen Verschleiß auf und ist überdies geräuscharm und präzise steuerbar. Aufgrund des fehlenden mechanischen Spiels sowie der niedrigen Elastizität ist mit dem Linearmotor in einem positionsgeregelten System eine hohe Steifigkeit und Positionsgenauigkeit erreichbar. Dies ist eine Voraussetzung dafür, dass auch dynamische Bewegungen und Bewegungsprofile der ersten Elektrode mit guter Genauigkeit und Reproduzierbarkeit ausgeführt werden können, so dass ein gutes Nachsetzverhalten der Zustelleinrichtung erreichbar ist. Auch eine nicht gut definierte Kraftwirkung etwaig mit zu bewegender Schweißstromkabel ist aufgrund der guten Positionierbarkeit des Linearmotors in gewissen Grenzen hinnehmbar, ohne das Schweißergebnis merklich zu beeinträchtigen.

Aufgrund der präzisen Steuerbarkeit des dynamischen Verhaltens des erfindungsgemäß vorzusehenden Linearmotors können zur Schweißstromzuführung zu den Elektroden flexibel biegsame Schweißstromkabel verwendet werden. Dies gilt auch für die besonders bevorzugte Ausführungsform, gemäß welcher der Läufer des Linearmotors die erste Elektrode aufweist und als schweißstromleitende Komponente ausgebildet ist und hierzu einen Schweißstromleiterabschnitt aufweist, der in den Stromversorgungsweg zwischen der Schweißstromquelle und der ersten Elektrode eingegliedert ist. So kann z.B. zur Schweißstromzuführung zu dem Schweißstromleiterabschnitt des Läufers ein hinreichend flexibel biegsamer und zu einer Schlaufe zur Bereitstellung von Bewegungsspiel geformter Verbindungsleiter vorgesehen sein, der vorzugsweise an dem der Schweißelektrode bzw. dessen Schweißgutberührungsfläche entfernten Ende des Läufers an dessen Schweißstromleiterabschnitt angeschlossen ist. Bei einem solchen Verbindungsleiter kann es sich z.B. um eine Flachlitze oder Dünnblechleitung handeln. Die Länge eines solchen flexibel biegsamen Verbindungsleiters sollte so gewählt sein, dass er den Bewegungen des Läufers gut folgen kann und die Steuerbarkeit des dynamischen Verhaltens des Linearmotors nicht merklich beeinträchtigt. Zwischen dem flexibel biegsamen Verbindungsleiter und der Schweißstromquelle kann z.B. eine fest installierte starre Stromschiene vorgesehen sein.

Die in der besonders bevorzugten Ausführungsform der Erfindung verwirklichte Überlegung, den Läufer des Linearmotors als schweißstromleitende Komponente auszubilden, führte zu dem Ergebnis, dass zu der bewegbaren ersten Elektrode kein äußeres Schweißstromkabel unmittelbar geführt und daher auch nicht in seiner unmittelbaren Anschlusskonfiguration an der bewegbaren ersten Elektrode mit dieser mitbewegt werden muss. Ein weiterer Vorteil der besonders bevorzugten Ausführungsform der Erfindung besteht darin, dass die bisher übliche platzgreifende Schweißstromkabelführung bis in die unmittelbare Nähe der Schweißgutberührungsstelle der bewegbaren ersten Schweißelektrode nicht mehr erforderlich ist.

Die Zustelleinrichtung kann gemäß einer alternativen Ausführungsform der Erfindung so gestaltet sein, dass der Schweißstrom so durch die Zustelleinrichtung hindurchgeführt wird, dass überhaupt kein Schweißstromkabel vorgesehen sein muss, welches von der Zustelleinrichtung mit der ersten Elektrode mitzubewegen wäre. Dies lässt sich z.B. dadurch erreichen, dass eine zur Führung des Läufers vorgesehene Führungsanordnung als schweißstromleitende Komponente ausgebildet und in den Stromversorgungsweg zwischen der Schweißstromquelle und der bewegbaren Elektrode, nämlich zwischen der Schweißstromquelle und dem Schweißstromleiterabschnitt eingegliedert ist. Dabei ist dafür zu sorgen, dass der Schweißstromleiterabschnitt elektrischen Kontakt mit der Führungsanordnung hat. Ein solcher elektrischer Kontakt lässt sich z.B. mittels elektrisch leitender Schleifkontakte oder Bürsten, z.B. Kohlebürsten herstellen. Zusätzlich oder alternativ kann zwischen einer solchen Führungsanordnung und dem Schweißstromleiterabschnitt eine elektrisch leitende Schmiermasse, z.B. ein Graphitfett, vorgesehen sein. Die genannten Maßnahmen zur Stromübertragung erlauben es, auf bewegte Schweißstromkabel zu verzichten, wodurch die dynamischen Eigenschaften der Zustelleinrichtung im Vergleich zu den Widerstandsschweißvorrichtungen nach dem Stand der Technik besser kontrollierbar sind, was sich auf das Schweißergebnis in positiver Weise auswirkt.

Für die erfindungsgemäße Widerstandsschweißvorrichtung kommen verschiedene Linearmotoren entsprechend den unterschiedlichen, in elektromagnetischen Direktlinearantrieben umsetzbaren Elektromotorfunktionsprinzipien in Frage, so z.B. ein permanent erregter Synchronantrieb.

Gemäß einer bevorzugten Ausführungsform der Erfindung ist der Stator als Aktivteil mit zur Magnetfelderzeugung mit Strom zu versorgenden Wickungen ausgebildet, wohingegen der Läufer als Passivteil mit Permanentmagneten bestückt ist. Diese Lösung hat den Vorteil, dass die elektrischen Leitungen für die elektromagnetische Magnetfelderzeugung starr verlegt sein können, da sie die Bewegungen des Läufers nicht mitmachen müssen und daher auch keinen mechanischen Einfluss auf die Bewegungsfähigkeit des Läufers haben.

Da die relativ hohen Schweißströme eine starke Erwärmung der Schweißstromleitungselemente verursachen, umfassen Ausführungsformen der Erfindung eine Flüssigkeitskühleinrichtung, vorzugsweise eine Wasserkühleinrichtung zur Kühlung des Elektromotors und/oder der schweißstromleitenden Komponenten. Andere Ausführungsformen können mit einer Gaskühlung, vorzugsweise Luftkühlung ausgestattet sein.

Vorzugsweise hat der Läufer in dessen Längsrichtung verlaufend einen Schweißstromleiterabschnitt und einen Permanentmagnetträgerabschnitt mit daran vorgesehenen Permanentmagneten. Der Schweißstromleiterabschnitt kann von einem oder mehreren Fluidkühlkanälen durchsetzt sein.

Gemäß einer weiteren bevorzugten Ausführungsform der Erfindung weist der Läufer als Schweißstromleiterabschnitt einen zentralen, sich längs der Bewegungsachse erstreckenden Metallkörper, vorzugsweise Aluminiumblock, auf, wobei zumindest an zwei entgegengesetzten Seiten des Metallkörpers in einer vorzugsweise symmetrischen Anordnung jeweils wenigstens ein Permanentmagnetträgerabschnitt des Läufers mit betreffenden Permanentmagneten vorgesehen ist. Eine solche Anordnung erlaubt es, Führungselemente zur Führung des Läufers von der Kraftwirkung des Elektromotors zu entlasten.

Eine ebenfalls bevorzugte Variante der Erfindung ist dadurch gekennzeichnet, dass der Linearmotor ein Tubular-Linearmotor mit einem stabförmigen Läufer und einem den Läufer in sich aufnehmenden rohr- oder hülsenförmigen Stator ist. Auch derartige Tubular-Linearmotoren sind in unterschiedlichsten Bauformen am Markt verfügbar und für die Zwecke der vorliegenden Erfindung entsprechend modifizierbar. Der stabförmige Läufer weist dabei z.B. ringförmige Permanentmagneten auf, die mit abwechselnder Polung und durch Trennelemente voneinander separiert auf der Längsachse des Läufers aneinandergereiht sind, so dass sie eine Rohrgestalt bilden. Im Inneren des Rohrs erstreckt sich gemäß einer Ausführungsform der Erfindung ein Metallkern entlang der Läufer-Längsachse, wobei dieser Metallkern den Schweißstromleiterabschnitt bildet. Dieser kann aus einem geeigneten Metall, z.B. aus Aluminium oder Kupfer oder betreffenden Legierungen gebildet sein. Gemäß einer bevorzugten Ausführungsform ist dieser Schweißstromleiterabschnitt als Röhrchen ausgebildet, welches sich in und entlang des von den Permanentmageneten definierten Rohres erstreckt und dazu eingerichtet ist, ein Kühlfluid, z.B. Wasser, zu leiten.

Vorzugsweise ist der Läufer des Linearmotors mit einer Elektrodenhalterung ausgebildet, welche die erste Elektrode an dem Läufer hält, und zwar an einem stirnseitigen Ende des Läufers.

Die Widerstandsschweißvorrichtung der vorliegenden Erfindung weist in sämtlichen bevorzugten Ausführungsformen eine Steuereinrichtung zur Bewegungssteuerung und insbesondere zur Soll-Positionseinstellung des Läufers relativ zum Stator auf, so dass eine präzise Steuerung der Läuferbewegung und Kraftübertragung des Läufers auf das Schweißgut möglich ist. In einer bevorzugten Variante kann die Positionssteuereinrichtung in einer kraftgesteuerten oder kraftgeregelten Betriebsart betrieben werden, um eine gewünschte Elektrodenkraft zu erzeugen. Das erleichtert die Einstellungen der Schweißung, da im Schweißprozess vorteilhafterweise die Elektrodenkraft eingestellt werden sollte und sich der Nachsetzweg und Nachsetzverlauf, also die Position des Antriebs eine sich als eine im Wesentlichen ergebende Größe darstellt.

Der Schweißstromleiterabschnitt kann gemäß einer Ausführungsform eine Federanordnung im Kraftübertragungsweg zur ersten Elektrode aufweisen. Diese Federanordnung ist zu Beginn eines Schweißvorgangs zusammengedrückt und gespannt, da sich bei der Zustellung der ersten Elektrode ab Berührung des Schweißgutes und vor dem Erweichen des Schweißgutes ein mechanischer Druck in dem Schweißstromleiterabschnitt aufbaut, so dass die Federanordnung zusammengedrückt wird. Sobald dann das Schweißgut in die Flüssigphase übergeht, kann die Federanordnung entspannen und erlaubt somit ein rasches Nachsetzen der ersten Elektrode. Die Federanordnung sitzt im Schweißstromweg und ist somit Teil der Schweißstromleitung. Sie kann auch so ausgestaltet sein, dass sie Kühlmittel, z.B. Kühlwasser, zur Elektrode leitet und hierzu beispielsweise einen Kühlmittelkanal aufweist.

Die Gegenelektrode oder zweite Elektrode ist bei bevorzugten Ausführungsformen der vorliegenden Erfindung über eine starre Stromschiene oder ein starr verlegtes Kabel mit der Schweißstromquelle verbunden.

Ausführungsbeispiele der Erfindung sind nachstehend unter Bezugnahme auf die Zeichnungen erläutert.
- Figur 1: zeigt ein erstes Ausführungsbeispiel einer Widerstandsschweißvorrichtung nach der Erfindung in einer Perspektivdarstellung.
- Figur 2: ist eine Draufsichtsdarstellung des Ausführungsbeispiels aus Figur 1.
- Figur 3: zeigt in einer Perspektivdarstellung mit segmentweise aufgeschnitten gezeigten Komponenten einen Tubular-Linearmotor für eine Widerstandsschweißvorrichtung nach der Erfindung.

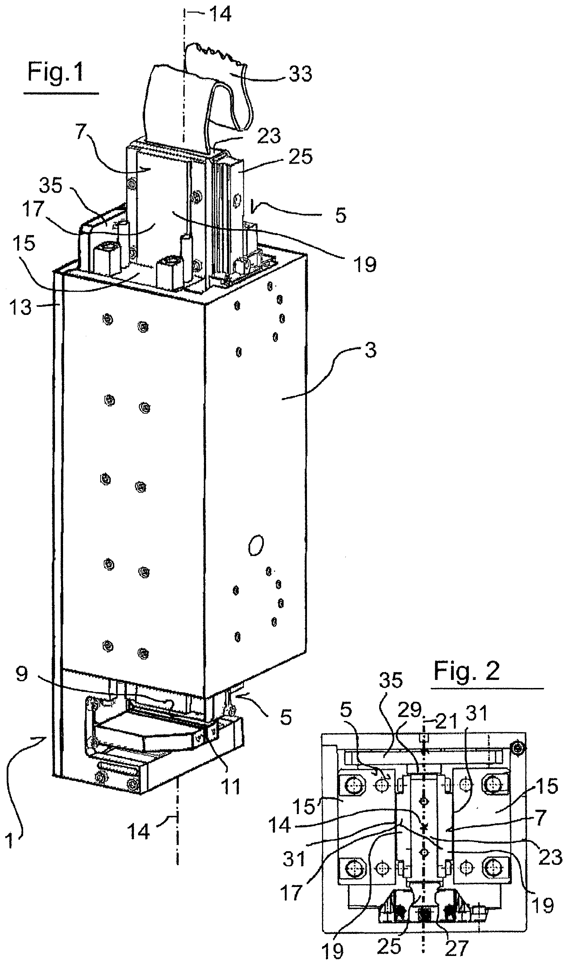

Die Widerstandsschweißvorrichtung gemäß Figur 1 weist einen Rahmen 1 mit Schutzgehäuse 3 sowie eine von dem Schutzgehäuse 3 umgebene Zustelleinrichtung 5 auf, die einen Linearmotor 7 umfasst. An ihrem in Figur 1 unteren Ende weist die Zustelleinrichtung 5 eine erste Elektrode 9 auf, die relativ zu einer zweiten Elektrode 11 mittels des Linearmotors 7 entlang der in Figur 1 vertikal verlaufenden Längs- und Linearbewegungsachse 14 der Zustelleinrichtung hin- und herbewegbar ist, um zusammen mit der zweiten Elektrode 11 Schweißgut zu beaufschlagen und bei entsprechender Schweißstromzuführung zu verschweißen.

Die zweite Elektrode 11 ist starr an dem Rahmen 1 fixiert. Die Widerstandsschweißvorrichtung kann z.B. an ihrer Rückwand 13 mit einem Rahmen einer Fertigungsmaschine zur Fertigung von Massenteilen verbunden werden, in deren Herstellungsprozess auch ein Schweißvorgang mittels der Widerstandsschweißvorrichtung vorzunehmen ist. Der Linearmotor 7 weist zwei sich parallel zu der Linearbewegungsachse 14 im Wesentlichen über die gesamte vertikale Länge des Gehäuses 3 darin erstreckende Statorelemente 15 auf, in denen Wicklungen zur elektromagnetischen Erzeugung von Magnetfeldern des Linearmotors in an sich bekannter Weise untergebracht sind. Derartige Statorteile sind am Markt verfügbar. Die Statorteile 15 bilden somit gemeinsam den Stator und den Aktivteil des als elektromagnetischer Direktlinearantrieb ausgebildeten Linearmotors 7.

Zwischen den Statorelementen 15 befindet sich der Läufer 17 des Linearmotors. Er umfasst als Permanentmagnetträgerabschnitte zwei Magnetschienen 19 mit entlang der Linearbewegungsachse 14 nebeneinander liegend angeordneten Permanentmagneten, die so verteilt sind, dass unmittelbar einander benachbarte Permanentmagnete entgegengesetzte Magnetisierungsrichtungen aufweisen, wie dies bei Linearmotoren an sich bekannt ist. Auch solche Magnetschienen sind am Markt verfügbar. In der Draufsicht gemäß Figur 2 ist erkennbar, dass der Linearmotor 7 eine symmetrische Anordnung relativ zu einer Vertikalebene 21 aufweist, wobei sich diese Vertikalebene 21 mittig durch den Läufer 17 erstreckt.

Zwischen den beiden Magnetschienen 19 weist der Läufer 17 als Schweißstromleiterabschnitt einen Metallblock 23 auf, der an seinem in Figur 1 unteren Ende die bewegbare Schweißelektrode 9 hält und elektrisch mit dieser verbunden ist. Der Läufer 17 weist an einer von der Vertikalebene 21 durchsetzten Seite eine Schiene 25 auf, die ebenfalls parallel zur Linearbewegungsachse 14 verläuft und in einem Führungsprofil 27 an dem Gehäuse 3 längsverschiebbar geführt ist. Eine zweite Längsverschiebungsführung 29 des Läufers 17 ist an dem der Führungsschiene 25 entgegengesetzten Seite des Läufers 7 vorgesehen.

Die Magnetschienen 19 sind gegenüber dem Schweißstromleiterabschnitt 23 elektrisch isoliert. Zwischen den Magnetschienen 19 und den benachbarten Statorelementen 15 ist jeweils ein Luftspalt 31 vorgesehen.

Die symmetrische Anordnung der Linearmotorkomponenten entlastet die Führungskomponenten 25, 27, 29 von der Kraftwirkung des Linearmotors.

Die Widerstandsschweißvorrichtung weist eine (nicht gezeigte) Steuereinrichtung zur Bewegungssteuerung und insbesondere Soll-Positionseinstellung des Läufers 17 relativ zu dem von den Statorelementen 15 gebildeten Stator auf. Die Steuereinrichtung umfasst vorzugsweise einen Positions- oder/und Antriebsstromregler für den Wicklungsstrom, einen Leistungssteller mit Strommessung und einen Positionsgeber zur jeweiligen Erfassung der Läuferposition relativ zum Stator des Linearmotors. Dem Positionsregler wird der jeweilige Soll-Positionswert des Läufers und der von dem Positionsgeber erfasste Ist-Positionswert zugeführt um ein Regelungsausgabesignal, z.B. Differenzsignal, dem Stromregler zuzuführen. Der Stromregler erhält auch das Messsignal der aktuellen Ist-Strommessung am Leistungssteller, um ein Regelungssignal für den Leistungssteller bereitzustellen, so dass Letzterer den Betriebsstrom des Linearmotors im Sinne der Minimalisierung der Differenz zwischen Positions-Sollwert und Positions-Istwert einstellt.

Die Steuereinrichtung ist so betreibbar, dass sie vorbestimmte Linearbewegungsprofile des Läufers 17 und der daran vorgesehenen Elektrode 9 erzeugen kann, um einen präzise gesteuerten Schweißprozess inklusive determinierter Nachsetzbewegung der ersten Elektrode 9 durchzuführen. Diese Bewegungsprofile sind vorzugsweise als programmierte Bewegungsprofile mittels eines digitalen Controllers abrufbar oder erzeugbar und von der Steuereinrichtung ausführbar.

Ferner weist die Widerstandsschweißvorrichtung eine Schweißstromsteuereinrichtung auf, die zur Steuerung des im Schweißstromleiterabschnitt 23 während eines Schweißvorgangs fließenden Schweißstromes vorgesehen ist. Der Schweißstrom wird dem in den Läufer 17 integrierten Schweißstromleiterabschnitt 23 mittels eines flexiblen Lamellenbandes bzw. einer Flachbandlitze 33 z.B. aus Kupfer zugeführt, wobei diese Flachbandleitung 33 eine mit sehr geringem mechanischen Aufwand beweg- und verformbare Schlaufe bildet, die den Bewegungen des Läufers 17 leicht folgen kann.

Eine alternative günstige Möglichkeit der Schweißstromzuführung zu dem Schweißstromleiterabschnitt 23 könnte darin bestehen, den Schweißstrom über die Führungsanordnungen 25, 27 bzw. 29 kabellos vorzunehmen, etwa indem zwischen Läufer und stationären Elementen der Führungen ein oder mehrere elektrisch leitende Bürstenanordnungen, vorzugsweise Kohlebürstenanordnungen, oder/und eine elektrisch leitende Schmiermasse, vorzugsweise Graphit enthaltende Schmiermasse, zur Schweißstromübertragung vorgesehen ist.

Die zweite Elektrode 11 ist über eine starre Stromschiene 35, z.B. aus Kupfer mit der externen Schweißstromquelle, vorzugsweise einem Schweißstromtransformator, verbunden.

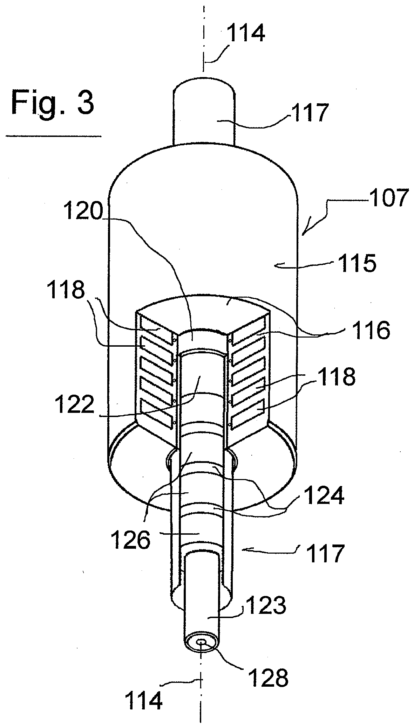

Figur 3 zeigt in einer Perspektivdarstellung einen Tubular-Linearmotor, wie er beispielsweise als Polysolenoid-Linearmotor mit genutetem Stator ausgebildet ist. Der Stator 115 ist rohrförmig oder hülsenförmig ausgebildet und umfasst einen ferromagnetischen Statorkörper 116 mit darin aufgenommenen Wicklungen, z.B. Zwei-Phasen-Wicklungen 118, denen zum Betrieb des Linearmotors der Antriebsstrom zuzuführen ist. In dem Durchgangskanal des Statorgehäuses 116 ist eine Lagerhülse 120 koaxial zu der Längsachse und Linearbewegungsachse 114 aufgenommen und fixiert. Innerhalb dieser Lagerhülse 120 ist der Läufer 117 längs der Linearbewegungsachse 114 hin- und herbewegbar geführt. Der Läufer 117 weist ein äußeres Läuferrohr 122 auf, welches mit der Lagerhülse 120 in Kontakt steht. In dem Läuferrohr sind separiert durch ringförmige Trennelemente 124 ringförmige Permanentmagnete 126 entlang der Linearbewegungsachse 114 aneinandergereiht, wobei unmittelbar einander benachbarte Permanentmagnete 126 entgegengesetzte Magnetisierungsrichtungen aufweisen. Die ringförmigen Permanentmagnete 126 sitzen auf einem zur Linearbewegungsachse 114 koaxial angeordneten, rohrförmigen Schweißstromleiterabschnitt 123. Der Schweißstromleiterabschnitt 123 und die Permanentmagnete 126 sowie die dazwischen angeordneten Trennelemente 124 sind in dem Läuferrohr 122 fixiert, so dass sie Teil des Läufers 117 sind. An dem unteren Ende des Schweißstromleiterabschnittes 123 des Läufers 117 ist die bewegbare Elektrode der mit dem Linearmotor ausgestatteten Widerstandsschweißvorrichtung nach der Erfindung mittels einer Elektrodenhalterung anzubringen, so dass der durch den Schweißstromleiterabschnitt 123 fließende Schweißstrom die bewegbare Elektrode erreicht.

Auch bei einer mit dem Tubular-Linearmotor nach Figur 3 ausgestatteten Widerstandsschweißvorrichtung nach der Erfindung kann der Schweißstrom zum Schweißstromleiterabschnitt 123 durch ein Kabel, das im Bereich des in Figur 3 oberen Endes des Läufers 117 an dem Schweißstromleiterabschnitt 123 anschließbar ist, oder kabellos vermittels Schleifkontakten, z.B. Kohlebürsten oder/und einer elektrisch leitenden Schmiermasse wie z.B. Graphitfett usw. geleitet werden. Im Falle der kabellosen Schweißstromübertragung zum Schweißstromleiterabschnitt 123 ist ein am Umfang des Schweißstromleiterabschnittes 123 berührend anliegender Leiter, z.B. Schleifkontakt, vorzusehen, um den Schweißstrom zuzuführen.

Der Schweißstromleiterabschnitt 123 enthält einen zentralen axialen Kühlmittelkanal 128 zum Durchleiten von Kühlflüssigkeit, vorzugsweise Kühlwasser.

Wie auch bereits in Bezug auf das erste Ausführungsbeispiel erläutert, weist auch eine Ausführungsform der Erfindung mit einem Tubular-Linearmotor, wie er in Figur 3 gezeigt ist, eine Positionsregelung des Läufers 117 auf, die ein präzises Bewegungsprofil des Läufers erzeugen kann, um gute und reproduzierbare Schweißergebnisse beim Widerstandsschweißen zu erzielen.

Die Bewegung des Läufers wird in an sich bekannter Weise durch Steuerung des den Wicklungen 118 des Linearmotors zugeführten Erregerstroms bestimmt.

## Patentansprüche

1. Widerstandsschweißvorrichtung, umfassend zwei einander gegenüberliegend angeordnete, an einer Schweißstromquelle über einen jeweiligen Stromversorgungsweg anschließbare Schweißelektroden (9, 11) zum Schweißen von Schweißgut, das zwischen den Elektroden (9, 11) anzuordnen ist, wobei zumindest eine erste (9) der beiden Elektroden (9, 11) mittels einer Zustelleinrichtung (5) relativ zu der anderen Elektrode (11) aus einer Elektrodendistanzstellung in eine Schweißstellung bewegbar ist, um Schweißgut zwischen den Elektroden (9, 11) zu verschweißen, wobei die Zustelleinrichtung (5) einen Elektromotor (7; 107) zur Bewegung der der ersten Elektrode (9) aufweist,
wobei der Elektromotor (7; 107) ein Linearmotor mit einem Stator (15; 115) und einem längs einer Linearbewegungsachse (14; 114) linear bewegbar geführten Läufer (17; 117) ist, **dadurch gekennzeichnet, dass** der Läufer (17; 117) die erste Elektrode (9) aufweist, wobei der Läufer (17; 117) als Schweißstrom leitende Komponente ausgebildet ist und hierzu einen Schweißstromleiterabschnitt (23; 123) aufweist, der in den Stromversorgungsweg zwischen der Schweißstromquelle und der ersten Elektrode (9) eingegliedert ist.

2. Widerstandsschweißvorrichtung nach Anspruch 1, **dadurch gekennzeichnet, dass** der Stator (15; 115) als Aktivteil mit zur Magnetfelderzeugung mit Strom zu versorgenden Wicklungen (118) ausgebildet ist, wohingegen der Läufer (17; 117) als Passivteil mit Permanentmagneten (126) bestückt ist.

3. Widerstandsschweißvorrichtung nach einem der vorhergehenden Ansprüche, **dadurch gekennzeichnet, dass** sie eine Kühleinrichtung, vorzugsweise Flüssigkeitskühleinrichtung, insbesondere Wasserkühleinrichtung, zur Kühlung umfasst.

4. Widerstandsschweißvorrichtung nach einem der vorhergehenden Ansprüche, **dadurch gekennzeichnet, dass** der Läufer (17; 117) in dessen Längsrichtung verlaufend einen Schweißstromleiterabschnitt (23; 123) und einen Permanentmagnetträgerabschnitt mit Permanentmagneten (126) aufweist.

5. Widerstandsschweißvorrichtung nach Anspruch 4, **dadurch gekennzeichnet, dass** der Läufer (17) als Schweißstromleiterabschnitt (23) einen zentralen, sich längs der Linearbewegungsachse (14) erstreckenden länglichen Metallkörper, vorzugsweise Aluminiumblock, aufweist und dass zumindest an zwei entgegengesetzten Seiten des Metallkörpers in einer vorzugsweise symmetrischen Anordnung jeweils wenigstens ein Permanentmagnetträgerabschnitt (19) des Läufers (17) mit betreffenden Permanentmagneten vorgesehen ist.

6. Widerstandsschweißvorrichtung nach einem der vorhergehenden Ansprüche, **dadurch gekennzeichnet, dass** der Linearmotor ein Tubular-Linearmotor (107) mit einem stabförmigen Läufer (117) und einem den Läufer in sich aufnehmenden rohr- oder hülsenförmigen Stator (115) ist.

7. Widerstandsschweißvorrichtung nach einem der vorhergehenden Ansprüche, **dadurch gekennzeichnet, dass** die erste Elektrode (9) an einem stirnseitigen Ende des Läufers (17) angeordnet ist.

8. Widerstandsschweißvorrichtung nach einem der vorhergehenden Ansprüche, **dadurch gekennzeichnet, dass** der Schweißstromleiterabschnitt (23) über einen flexibel biegsamen Verbindungsleiter (33), vorzugsweise eine Flachlitze oder Dünnblechleitung, mit der Schweißstromquelle verbunden ist.

9. Widerstandsschweißvorrichtung nach einem der vorhergehenden Ansprüche, **dadurch gekennzeichnet, dass** der Läufer (117) vorzugsweise im Bereich des Schweißstromleiterabschnitts (123) oder/und der Stator von wenigstens einem Kühlmittelkanal (128) durchsetzt ist.

10. Widerstandsschweißvorrichtung nach Anspruch 9, **dadurch gekennzeichnet, dass** der Schweißstromleiterabschnitt (123) zumindest bereichsweise rohrförmig ist und sich zentral durch den Läufer (117) hindurch entlang der Linearbewegungsachse (114) erstreckt.

11. Widerstandsschweißvorrichtung nach einem der vorhergehenden Ansprüche, **dadurch gekennzeichnet, dass** sie eine Steuereinrichtung zur Bewegungssteuerung, insbesondere Soll-Positionseinstellung des Läufers (17; 117) relativ zum Stator (15; 115) aufweist.

12. Widerstandsschweißvorrichtung nach Anspruch 11, **dadurch gekennzeichnet, dass** die Steuereinrichtung dazu eingerichtet ist, die Bewegungssteuerung und Soll-Positionseinstellung des Läufers (17; 117) durch Steuerung der Stromzufuhr zu den Wicklungen (118) des Aktivteils des Linearmotors (7; 107) vorzunehmen.

13. Widerstandsschweißvorrichtung nach einem der vorhergehenden Ansprüche, **dadurch gekennzeichnet, dass** eine den Läufer (17) längs der Linearbewegungsachse (14) führende Führungseinrichtung (25) als Schweißstrom leitende Komponente ausgebildet und in den Stromversorgungsweg zwischen der Schweißstromquelle und dem Schweißstromleiterabschnitt (23) eingegliedert ist.

14. Widerstandsschweißvorrichtung nach Anspruch 13, **dadurch gekennzeichnet, dass** zur verbesserten Stromübertragung zwischen der Führungsanordnung (25) und dem Schweißstromleiterabschnitt (23) eine elektrisch leitende Bürstenanordnung, vorzugsweise Kohlebürstenanordnung, oder/und eine elektrisch leitende Schmiermasse , vorzugsweise Graphit enthaltende Schmiermasse, vorgesehen ist.

15. Widerstandsschweißvorrichtung nach einem der vorhergehenden Ansprüche, **dadurch gekennzeichnet, dass** sie eine Federanordnung im Kraftübertragungsweg zur ersten Elektrode aufweist.

16. Widerstandsschweißvorrichtung nach Anspruch 15, **dadurch gekennzeichnet, dass** die Federanordnung ausgebildet ist als Teil der Schweißstromleitung, um Schweißstrom zu leiten, oder/und als Teil einer Kühlmittelleitung, um Kühlmittel, insbesondere Kühlwasser, zu leiten.

## Claims

1. Resistance welding device, comprising two welding electrodes (9, 11) for welding welding material to be arranged between the electrodes (9, 11), which electrodes are arranged opposite one another and can each be connected via a current supply path to a welding current source, at least a first (9) of the two electrodes (9, 11) being movable relative to the other electrode (11) from an electrode distance position into a welding position by means of a feeding apparatus (5) in order to weld welding material between the electrodes (9, 11), the feeding apparatus (5) comprising an electric motor (7; 107) for moving the first electrode (9), the electric motor (7; 107) being a linear motor having a stator (15; 115) and a rotor (17; 117) that is guided so as to be movable linearly along a linear movement axis (14; 114), **characterised in that** the rotor (17; 117) comprises the first electrode (9), the rotor (17; 117) being designed as a component that conducts welding current and comprising a welding-current conductor portion (23; 123) for this purpose, which portion is integrated in the current supply path between the welding current source and the first electrode (9).

2. Resistance welding device according to claim 1, **characterised in that** the stator (15; 115) is designed as an active part having windings (118) that can be supplied with current in order to generate a magnetic field, whereas the rotor (17; 117) is designed as a passive part provided with permanent magnets (126).

3. Resistance welding device according to either of the preceding claims, **characterised in that** it comprises a cooling apparatus, preferably a liquid cooling apparatus, in particular a water cooling apparatus, for cooling.

4. Resistance welding device according to any of the preceding claims, **characterised in that** the rotor (17; 117) comprises, extending in the longitudinal direction thereof, a welding-current conductor portion (23; 123) and a permanent-magnet carrier portion comprising permanent magnets (126).

5. Resistance welding device according to claim 4, **characterised in that** the rotor (17) comprises a central metal body, preferably an aluminium block, which extends along the linear movement axis (14) as the welding-current conductor portion (23), and **in that** at least one permanent-magnet carrier portion (19) of the rotor (17) having associated permanent magnets is arranged on each of at least two opposite sides of the metal body in a preferably symmetric arrangement.

6. Resistance welding device according to any of the preceding claims, **characterised in that** the linear motor is a tubular linear motor (107) having a rod-shaped rotor (117) and a tubular or sleeve-shaped stator (115) that receives the rotor.

7. Resistance welding device according to any of the preceding claims, **characterised in that** the first electrode (9) is arranged on an end face of the rotor (17).

8. Resistance welding device according to any of the preceding claims, **characterised in that** the welding-current conductor portion (23) is connected to the welding current source by means of a flexibly pliant connection conductor (33), preferably a flat stranded wire or a thin-sheet-metal line.

9. Resistance welding device according to any of the preceding claims, **characterised in that** a coolant channel (128) passes through the rotor (117) preferably in the region of the welding-current conductor portion (123), and/or passes through the stator.

10. Resistance welding device according to claim 9, **characterised in that** the welding-current conductor portion (123) is tubular at least in regions and extends centrally through the rotor (117) along the linear movement axis (114).

11. Resistance welding device according to any of the preceding claims, **characterised in that** it comprises a control apparatus for movement control, in particular for setting a target position of the rotor (17; 117) relative to the stator (15; 115).

12. Resistance welding device according to claim 11, **characterised in that** the control apparatus is designed to carry out the movement control and the target-position setting of the rotor (17; 117) by controlling the supply of current to the windings (118) of the active part of the linear motor (7; 107).

13. Resistance welding device according to any of the preceding claims, **characterised in that** a guiding apparatus (25) which guides the rotor (17) along the linear movement axis (14) is designed as a component that conducts welding current and is integrated in the current supply path between the welding current source and the welding-current conductor portion (23).

14. Resistance welding device according to claim 13, **characterised in that**, in order to improve the transmission of current between the guide arrangement (25) and the welding-current conductor portion (23), an electrically conductive brush arrangement, preferably a carbon brush arrangement, and/or an electrically conductive lubricant, preferably a lubricant containing graphite, is provided.

15. Resistance welding device according to any of the preceding claims, **characterised in that** it comprises a spring arrangement in the path of force transmission to the first electrode.

16. Resistance welding device according to claim 15, **characterised in that** the spring arrangement is designed to conduct welding current as part of the welding current line, and/or to conduct coolant, in particular cooling water, as part of a coolant line.

## Revendications

1. Dispositif de soudage par résistance comprenant deux électrodes de soudage (9, 11) disposées de manière à se faire face l'une l'autre, pouvant être raccordées à une source de courant de soudage par l'intermédiaire d'un trajet d'alimentation en courant respectif, servant au soudage d'un article à souder, qui est à disposer entre les électrodes (9, 11), dans lequel au moins une première (9) des deux électrodes (9, 11) peut être déplacée par rapport à l'autre électrode (11) depuis une position d'espacement des électrodes jusqu'à une position de soudage au moyen d'un système de rapprochement (5) afin de souder l'article à souder entre les électrodes (9, 11), le système de rapprochement (5) présentant un moteur électrique (7 ; 107) servant à déplacer la première électrode (9),
dans lequel le moteur électrique (7 ; 107) est un moteur linéaire avec un stator (15 ; 115) et un élément mobile (17 ; 117) guidé de manière à pouvoir être déplacé linéairement le long d'un axe de déplacement linéaire (14 ; 114),
**caractérisé en ce que** l'élément mobile (17 ; 117) présente la première électrode (9), l'élément mobile (17; 117) étant réalisé en tant que composant conduisant du courant de soudage et présente à cet effet une section de conducteur de courant de soudage (23 ; 123) qui est insérée sur le trajet d'alimentation en courant entre la source de courant de soudage et la première électrode (9).

2. Dispositif de soudage par résistance selon la revendication 1, **caractérisé en ce que** le stator (15 ; 115) est réalisé en tant que partie active avec des enroulements (118) à alimenter en courant aux fins de la génération d'un champ magnétique, tandis que l'élément mobile (17 ; 117) en tant que partie passive est équipé avec des aimants permanents (126).

3. Dispositif de soudage par résistance selon l'une quelconque des revendications précédentes, **caractérisé en ce qu'**il comprend aux fins du refroidissement un système de refroidissement, de préférence un système de refroidissement à liquide, en particulier un système de refroidissement à eau.

4. Dispositif de soudage par résistance selon l'une quelconque des revendications précédentes, **caractérisé en ce que** l'élément mobile (17 ; 117) présente, s'étendant dans son sens longitudinal, une section de conducteur de courant de soudage (23 ; 123) et une section de support d'aimants permanents avec des aimants permanents (126).

5. Dispositif de soudage par résistance selon la revendication 4, **caractérisé en ce que** l'élément mobile (17) présente en tant que section de conducteur de courant de soudage (23), un corps métallique central allongé, s'étendant le long de l'axe de déplacement linéaire (14), de préférence un bloc en aluminium, et que respectivement au moins une section de support d'aimants permanents (19) de l'élément mobile (17) avec des aimants permanents concernés est prévue au moins au niveau de deux côtés opposés du corps métallique selon un agencement de préférence symétrique.

6. Dispositif de soudage par résistance selon l'une quelconque des revendications précédentes, **caractérisé en ce que** le moteur linéaire est un moteur tubulaire linéaire (107) avec un élément mobile (117) en forme de barre et un stator (115) en forme de tube ou de douille recevant en son sein l'élément mobile.

7. Dispositif de soudage par résistance selon l'une quelconque des revendications précédentes, **caractérisé en ce que** la première électrode (9) est disposée au niveau d'une extrémité côté frontal de l'élément mobile (17).

8. Dispositif de soudage par résistance selon l'une quelconque des revendications précédentes, **caractérisé en ce que** la section de conducteur de courant de soudage (23) est reliée à la source de courant de soudage par l'intermédiaire d'un conducteur de liaison (33) pliable flexible, de préférence d'un toron plat ou d'un câble en tôle mince.

9. Dispositif de soudage par résistance selon l'une quelconque des revendications précédentes, **caractérisé en ce que** l'élément mobile (117) de préférence dans la zone de la section de conducteur de courant de soudage (123) et/ou le stator sont traversés par au moins un canal de liquide de refroidissement (128).

10. Dispositif de soudage par résistance selon la revendication 9, **caractérisé en ce que** la section de conducteur de courant de soudage (123) est au moins par endroits de forme tubulaire et s'étend de manière centrale à travers l'élément mobile (117) le long de l'axe de déplacement linéaire (114).

11. Dispositif de soudage par résistance selon l'une quelconque des revendications précédentes, **caractérisé en ce qu'**il présente un système de commande servant à la commande de déplacement, en particulier au réglage de position de consigne de l'élément mobile (17 ; 117) par rapport au stator (15 ; 115).

12. Dispositif de soudage par résistance selon la revendication 11, **caractérisé en ce que** le système de commande est mis au point pour effectuer la commande de déplacement et le réglage de position de consigne de l'élément mobile (17 ; 117) par la commande de l'apport en courant aux enroulements (118) de la partie active du moteur linéaire (7; 107).

13. Dispositif de soudage par résistance selon l'une quelconque des revendications précédentes, **caractérisé en ce qu'**un système de guidage (25) guidant l'élément mobile (17) le long de l'axe de déplacement linéaire (14) est réalisé en tant que composant acheminant du courant de soudage et est intégré sur le trajet d'alimentation en courant entre la source de courant de soudage et la section de conducteur de courant de soudage (23).

14. Dispositif de soudage par résistance selon la revendication 13, **caractérisé en ce qu'**un ensemble de balais électroconducteur, de préférence un ensemble de balais de carbone, et/ou une masse lubrifiante électroconductrice, de préférence une masse lubrifiante contenant du graphite, est prévu pour la transmission de courant améliorée entre l'ensemble de guidage (25) et la section de conducteur de courant de soudage (23).

15. Dispositif de soudage par résistance selon l'une quelconque des revendications précédentes, **caractérisé en ce qu'**il présente un ensemble de ressorts sur le trajet de transmission de force vers la première électrode.

16. Dispositif de soudage par résistance selon la revendication 15, **caractérisé en ce que** l'ensemble de ressorts est réalisé en tant que partie du câble de courant de soudage pour acheminer du courant de soudage et/ou en tant que partie d'un conduit de liquide de refroidissement pour acheminer du liquide de refroidissement, en particulier de l'eau de refroidissement.
